(19) Europäisches Patentamt / European Patent Office / Office européen des brevets

(11) **EP 4 672 420 A1**

(12) **EUROPEAN PATENT APPLICATION**
published in accordance with Art. 153(4) EPC

(43) Date of publication:
**31.12.2025 Bulletin 2026/01**

(21) Application number: **24844196.6**

(22) Date of filing: **05.02.2024**

(51) International Patent Classification (IPC):
**H01M 10/42** (2006.01)  **H01M 10/0525** (2010.01)
**H01M 10/058** (2010.01)

(52) Cooperative Patent Classification (CPC):
Y02E 60/10

(86) International application number:
**PCT/CN2024/076076**

(87) International publication number:
**WO 2025/020497 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 CN 202310921889**

(71) Applicant: **Contemporary Amperex Technology
Co., Limited
Ningde, Fujian 352100 (CN)**

(72) Inventors:
• **ZHANG, Jiaxi
Ningde, Fujian 352100 (CN)**

• **GAO, Jie
Ningde, Fujian 352100 (CN)**
• **YAO, Meng
Ningde, Fujian 352100 (CN)**
• **MA, Yunjian
Ningde, Fujian 352100 (CN)**
• **TANG, Daichun
Ningde, Fujian 352100 (CN)**
• **YANG, Rui
Ningde, Fujian 352100 (CN)**

(74) Representative: **Jacob, Reuben Ellis et al
Maucher Jenkins
Seventh Floor Offices
Artillery House
11-19 Artillery Row
London SW1P 1RT (GB)**

(54) **SECONDARY BATTERY AND ELECTRICAL APPARATUS**

(57) The present application relates to a secondary battery and an electrical apparatus (4). The secondary battery comprises a positive electrode sheet (122) and a positive tab (121) connected thereto; the positive tab (121) comprises a first current collector (1211) and an anti-overcharge layer (1212), the anti-overcharge layer (1212) being arranged on the surface of the first current collector (1211), and the anti-overcharge layer (1212) comprising an anti-overcharge additive. The cycle performance of the secondary battery can be improved while overcharge prevention is taken into account.

FIG. 1

EP 4 672 420 A1

**Description**

**RELATED APPLICATIONS**

This application claims priority to Chinese Patent Application No. 2023109218896, filed with China National Intellectual Property Administration on July 26, 2023, and entitled "SECONDARY BATTERY AND ELECTRIC APPARATUS", which is incorporated herein by reference in its entirety.

**TECHNICAL FIELD**

This application relates to the field of secondary battery technologies, and specifically to a secondary battery and an electric apparatus.

**BACKGROUND**

The description herein merely provides background information related to this application and does not necessarily constitute the prior art.

Secondary batteries have been widely used in various consumer electronic products and electric vehicles due to their prominent advantages such as light weight, no pollution, and no memory effect. During battery use, overcharging can affect the cycle performance of the battery. Therefore, the issue of battery overcharging remains urgently to be solved.

**SUMMARY**

In view of this, it is necessary to provide a secondary battery and an electric apparatus capable of improving cycle performance while ensuring overcharge protection.

According to a first aspect, this application provides a secondary battery, including a positive electrode plate and a positive electrode tab connected to the positive electrode plate. The positive electrode tab includes a first current collector and an overcharge prevention layer. The overcharge prevention layer is disposed on a surface of the first current collector, and the overcharge prevention layer includes an overcharge prevention additive.

Without wishing to be bound by any theory, this application improves the positive electrode tab connected to the positive electrode plate in the secondary battery by specifically providing an overcharge prevention layer containing an overcharge prevention additive on the positive electrode tab. As a result, during overcharging of the secondary battery, an increase in the potential of the positive electrode plate can induce a slow reaction of the overcharge prevention additive in the positive electrode tab connected thereto, thereby ensuring overcharge protection. Additionally, since the overcharge prevention additive is not added to the positive electrode active layer of the positive electrode plate, the performance of the positive electrode active layer is substantially unaffected. Compared to placing the overcharge prevention additive in the positive electrode active layer, this significantly improves the cycle performance of the secondary battery during long-term use while also reducing the risk of overcharge runaway.

In any embodiment of this application, the overcharge prevention additive includes at least one of $Li_2C_2O_4$, $Li_2C_4O_4$, $Li_2C_3O_5$, $Li_2C_4O_6$, $Li_2C_6O_6$, $Li_2CO_3$, $LiN_3$, $LiODFB$, $Li_2O$, $Li_3N$, $LiF$, $LiCl$, $Li_2S$, $LiBH_4$, $CH_3COOLi$, $LiNO_3$, and $Li_2SO_4$.

In any embodiment of this application, in the overcharge prevention additive, a mass content of $Li_2C_2O_4$ ranges from 50% to 95%.

In any embodiment of this application, based on a total mass of the overcharge prevention layer, a mass content of the overcharge prevention additive ranges from 0.5% to 50%.

In any embodiment of this application, the binder includes at least one of polypropylene, polyacrylic acid, polystyrene, polyterephthalic acid, styrene-butadiene rubber, water-based acrylic resin, polytetrafluoroethylene, ethylene-vinyl acetate copolymer, carboxymethyl cellulose, polyvinyl alcohol, polyvinyl butyral, and polyvinylidene fluoride.

In any embodiment of this application, the positive electrode plate includes a second current collector and a positive electrode active layer disposed on the second current collector;

An area ratio of the overcharge prevention layer to the positive electrode active layer is (1 to 10): 100.

In any embodiment of this application, the overcharge prevention additive can decompose and produce gas at a voltage greater than or equal to 4.2V.

In any embodiment of this application, the overcharge prevention layer further includes insulating particles;

Based on the total mass of the overcharge prevention layer, a mass content of the insulating particles ranges from 1% to 30%.

In any embodiment of this application, a thickness of the overcharge prevention layer ranges from 10 $\mu$m to 150 $\mu$m.

In any embodiment of this application, the positive electrode tab further includes a first tab adhesive layer, and the first tab adhesive layer is disposed on a surface of the overcharge prevention layer facing away from the first current collector.

In any embodiment of this application, the overcharge prevention layer further includes a conductive agent with a mass content ranging from 0% to 5%.

In any embodiment of this application, a thickness of the first tab adhesive layer ranges from 5 $\mu$m to 100 $\mu$m.

In any embodiment of this application, the positive electrode plate includes a second current collector and a positive electrode active layer disposed on the second current collector, the second current collector and the first current collector being interconnected to form an integral structure, the surface of the first current collector further including a blank region adjacent to the overcharge prevention layer, and the overcharge prevention layer being located between the blank region and the second current collector.

In any embodiment of this application, the positive electrode tab further includes a second tab adhesive layer adjacent to and disposed in the same layer as the overcharge prevention layer.

In any embodiment of this application, a thickness of the second tab adhesive layer ranges from 30 $\mu$m to 150 $\mu$m.

According to a second aspect, this application provides an electric apparatus, including the secondary battery provided in the first aspect of this application.

Details of one or more embodiments of this application are provided in the following accompanying drawings and description. Other features, purposes, and advantages of this application will become apparent from the specification, the accompanying drawings, and the claims.

## BRIEF DESCRIPTION OF DRAWINGS

To describe the technical solutions in the embodiments of this application more clearly, the following briefly describes the accompanying drawings required for describing the embodiments or conventional technologies. Apparently, the accompanying drawings in the following description show merely the embodiments of this application, and persons of ordinary skill in the art may still derive other drawings from the disclosed accompanying drawings without creative efforts.

FIG. 1 is a schematic top view of a positive electrode plate and a positive electrode tab of a secondary battery according to an embodiment of this application;
FIG. 2 is a schematic cross-sectional view of the positive electrode tab shown in FIG. 1;
FIG. 3 is a schematic cross-sectional view of a positive electrode tab of a secondary battery according to another embodiment of this application;
FIG. 4 is a schematic top view of a positive electrode tab of a secondary battery according to another embodiment of this application;
FIG. 5 is a schematic top view of a positive electrode plate and a positive electrode tab of a secondary battery according to another embodiment of this application;
FIG. 6 is a schematic diagram of a battery cell according to an embodiment of this application;
FIG. 7 is an exploded view of the battery cell according to the embodiment of this application shown in FIG. 6;
FIG. 8 is a schematic diagram of a battery module according to an embodiment of this application;
FIG. 9 is a schematic diagram of a battery pack according to an embodiment of this application;
FIG. 10 is an exploded view of the battery pack according to the embodiment of this application shown in FIG. 9; and
FIG. 11 is a schematic diagram of an electric apparatus using a secondary battery as a power source according to an embodiment of this application.

Description of reference signs:
1. battery cell; 11. housing; 12. electrode assembly; 13. cover plate; 121. positive electrode tab; 1211. first current collector; 1212. overcharge prevention layer; 1213. first tab adhesive layer; 1214. second tab adhesive layer; 122. positive electrode plate; 2. battery pack; 21. upper box; 22. lower box; 3. battery module; and 4. electric apparatus.

## DESCRIPTION OF EMBODIMENTS

The following specifically discloses embodiments of this application with appropriate reference to detailed descriptions of the accompanying drawings. However, there may be cases in which unnecessary detailed descriptions are omitted. For example, detailed description of a well-known matter or repeated description of an actually identical structure has been omitted. This is to avoid unnecessarily prolonging the following descriptions, for ease of understanding by persons skilled in the art. Additionally, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. Additionally, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers from "0-5" are listed herein, and "0-5" is just an abbreviated representation of a combination of these values. Additionally, a parameter expressed as an integer greater than or equal to 2 is equivalent to disclosure that the parameter is, for example, an integer of 2, 3, 4, 5, 6, 7, 8, 9, 10, 11, or 12.

Unless otherwise specified, all the technical features and optional technical features of this application can be combined with each other to form new technical solutions. Unless otherwise specified, all the steps in this application can be performed in the order described or in random order, preferably, in the order described. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

In this application, unless otherwise specified, technical features or technical solutions described with open-ended terms such as "containing", "comprising", or "including" do not exclude additional members beyond those listed. Such descriptions may be regarded as providing both closed features or solutions consisting of the listed members and open features or solutions including additional members beyond the listed members. For example, if A includes a1, a2, and a3, unless otherwise specified, it may further include other members or may not include additional members. It may be regarded as providing both the feature or solution "A consists of a1, a2, and a3" and the feature or solution "A includes not only a1, a2, and a3 but also other members".

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be measured by using the methods provided in some embodiments of this application).

Secondary Battery

A secondary battery is a battery that can be charged after being discharged to activate active materials for continuous use.

Generally, a secondary battery includes a positive electrode plate, a negative electrode plate, and an electrolyte. In a charge and discharge process of the battery, active ions intercalate and deintercalate back and forth between the positive electrode plate and the negative electrode plate. It can be understood that the active ions originate from a positive electrode active material of the positive electrode plate.

To facilitate the connection of the secondary battery to an external circuit, electrode tabs are generally included. The electrode tab connected to the positive electrode plate is a positive electrode tab, and the electrode tab connected to the negative electrode plate is a negative electrode tab.

The positive electrode tab includes a first current collector and an overcharge prevention layer. The overcharge prevention layer is disposed on a surface of the first current collector, and the overcharge prevention layer includes a binder and an overcharge prevention additive.

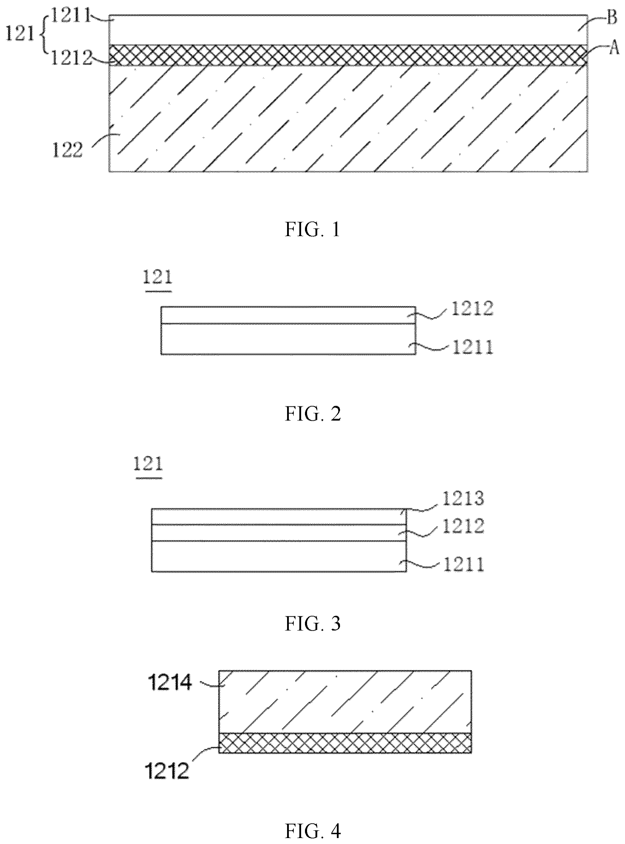

Referring to FIG. 1 and FIG. 2, a positive electrode tab 121 is shown connected to a positive electrode plate 122. The positive electrode tab 121 includes a first current collector 1211 and an overcharge prevention layer 1212. The overcharge prevention layer 1212 is disposed on a surface of the first current collector 1211, and the overcharge prevention layer 1212 includes an overcharge prevention additive. Referring to FIG. 1, the region provided with the overcharge prevention layer 1212 is an overcharge prevention zone A.

Without wishing to be bound by any theory, this application improves the positive electrode tab connected to the positive electrode plate in the secondary battery by specifically providing an overcharge prevention layer containing an overcharge prevention additive on the positive electrode tab. As a result, during overcharging of the secondary battery, an increase in the potential of the positive electrode plate can induce a slow reaction of the overcharge prevention additive in the positive electrode tab connected thereto, thereby ensuring overcharge protection. Additionally, since the overcharge prevention additive is not added to the positive electrode active layer of the positive electrode plate, the performance of the positive electrode active layer is substantially unaffected. Compared to placing the overcharge prevention additive in the positive electrode active layer, this significantly improves the cycle performance of the secondary battery during long-term use while also reducing the risk of overcharge runaway.

In some embodiments, the overcharge prevention additive can decompose and produce gas at a voltage greater than or equal to 4.2V. Thus, during overcharging of the secondary battery, the overcharge prevention additive decomposes and releases gas when the overcharge voltage is greater than or equal to 4.2V, thereby mitigating damage to a cathode. The gas production is timely and responsive to the overcharge phenomenon. For example, the gas production may increase the internal pressure of the secondary battery, enabling timely response to overcharging through internal pressure monitoring. This allows for overcharge prevention interventions, such as stopping the charging of the battery before the battery is damaged or explodes, thereby improving the safety of the secondary battery.

Further, the gas production of the overcharge prevention additive may occur at voltages ranging from 4.25V to 6.0V. The operating voltage range of the overcharge prevention additive is broader, allowing for a wider normal operating voltage range for the secondary voltage. For example, it is applicable to batteries with a low voltage of 4.2V, providing timely protection during overcharging and preventing safety issues associated with low-voltage overcharging.

Further, the gas produced by the overcharge prevention additive includes, but is not limited to, at least one of nitrogen and carbon dioxide. It can be understood that due to the complexity of gas production mechanisms, the types of gases produced are merely exemplified here. The actual types of produced gases are not limited to these examples, provided that gas can be produced at the overcharge voltage.

In some embodiments, the overcharge prevention additive includes at least one of $Li_2C_2O_4$, $Li_2C_4O_4$, $Li_2C_3O_5$, $Li_2C_4O_6$, $Li_2C_6O_6$, $Li_2CO_3$, $LiN_3$, LiODFB, $Li_2O$, $Li_3N$, LiF, LiCl, $Li_2S$, $LiBH_4$, $CH_3COOLi$, $LiNO_3$, and $Li_2SO_4$.

Further, the overcharge prevention additive includes at least one of $Li_2C_2O_4$, $Li_2C_4O_4$, $Li_2C_4O_6$, $Li_2C_3O_5$, and $LiN_3$.

In some examples, the overcharge prevention additive includes $Li_2C_2O_4$ and $Li_2C_4O_6$.

In some examples, in the overcharge prevention additive, a mass content of $Li_2C_2O_4$ ranges from 50% to 95%, optionally from 50% to 80%. For example, the mass content may be 50%, 55%, 60%, 65%, 70%, 75%, 80%, 85%, 90%, or 95%.

In some embodiments, the components of the overcharge prevention layer further include a binder, which can effectively bind the overcharge prevention additive and adhere to the surface of the first current collector. In some other examples, the overcharge prevention layer may not contain a binder.

In some embodiments, based on a total mass of the overcharge prevention layer, a mass content of the overcharge prevention additive ranges from 0.5% to 50%, optionally from 2% to 20%, optionally from 5% to 20%, more optionally from 5% to 15%. As an example, in the overcharge prevention layer, the mass content of the overcharge prevention additive may be 0.5%, 2%, 5%, 10%, 15%, 20%, 25%, 30%, 35%, 40%, 45%, or 50%. Within this range, the cycle performance and safety performance of the secondary battery can be better balanced.

In some embodiments, the binder in the overcharge prevention layer includes at least one of polypropylene, polyacrylic acid, polystyrene, polyterephthalic acid, styrene-butadiene rubber, water-based acrylic resin, polytetrafluoroethylene, ethylene-vinyl acetate copolymer, carboxymethyl cellulose, polyvinyl alcohol, polyvinyl butyral, and polyvinylidene fluoride.

Further, the binder in the overcharge prevention layer includes polypropylene.

In some embodiments, the components of the overcharge prevention layer further include insulating particles. The insulating particles can serve as a particle reinforcement phase to the overcharge prevention layer, providing support and reinforcement, thereby improving the structural strength of an overcharge prevention layer structure. Additionally, the insulating particles can improve the heat resistance of the overcharge prevention layer.

The insulating particles include at least one of inorganic particles, organic particles, and organic-inorganic hybrid particles.

Further, the inorganic particles include, but are not limited to, at least one of aluminum oxide, boehmite, zinc oxide, silicon dioxide, titanium dioxide, zirconium oxide, calcium carbonate, boron nitride, and manganese sulfide.

Further, based on the total mass of the overcharge prevention layer, a mass content of the insulating particles ranges from 1% to 30%; more optionally from 5% to 20%. As an example, based on the total mass of the overcharge prevention layer, the mass content of the insulating particles may be 1%, 2%, 5%, 10%, 15%, 20%, 25%, or 30%.

Further, a particle size Dv50 of the insulating particles ranges from 1 $\mu$m (micron) to 30 $\mu$m, more optionally from 5 $\mu$m to 15 $\mu$m. A median particle size by volume Dv50 of the insulating particles has a well-known meaning in the art and can be tested using methods known in the art. For example, it can be measured using a laser particle size analyzer (for example, Malvern Master Size 3000). Here, the particle size Dv50 indicates the particle size at which the cumulative volume distribution percentage of particles, starting from the small particle size side in the particle size distribution, reaches 50%.

In some embodiments, a thickness of the overcharge prevention layer ranges from 10 $\mu$m to 150 $\mu$m; optionally from 30 $\mu$m to 100 $\mu$m. As an example, the thickness of the overcharge prevention layer may be 10 $\mu$m, 20 $\mu$m, 30 $\mu$m, 40 $\mu$m, 50 $\mu$m, 60 $\mu$m, 80 $\mu$m, 90 $\mu$m, 100 $\mu$m, 120 $\mu$m, or 150 $\mu$m.

In some embodiments, the overcharge prevention layer can be prepared by the following method: mixing the overcharge prevention additive, a solvent, and an optional binder to obtain an overcharge prevention slurry, applying the overcharge prevention slurry onto the first current collector, and drying and curing. Here, the optional binder means that the binder may be added or not added.

It can be understood that the applying methods include, but are not limited to, spraying, brushing, and spin coating.

Further, the solvent used in preparing the overcharge prevention layer may include at least one of water and an organic solvent. As an example, the organic solvent may be N-methylformamide (NMF).

In some embodiments, the positive electrode tab further includes a first tab adhesive layer. The first tab adhesive layer is disposed on a surface of the overcharge prevention layer facing away from the first current collector. Thus, the first tab adhesive layer can provide insulation protection to the underlying overcharge prevention layer. As shown in FIG. 3, in the positive electrode tab 121, the first current collector 1211 is sequentially provided with an overcharge prevention layer 1212 and a first tab adhesive layer 1213 in the overcharge prevention zone A.

It can be understood that the components of the first tab adhesive layer may use conventional tab adhesives. The components of the first tab adhesive layer include a binder. Further, the selection range of the binder in the second tab adhesive layer may be the same as that of the binder in the overcharge prevention layer, but the specific types in specific examples may be the same or different.

In some embodiments, the components of the overcharge prevention layer further include a conductive agent with a mass content ranging from 0% to 5%. In other words, the content of the conductive agent in the overcharge prevention layer may be 0. When the first tab adhesive layer is also provided on an upper surface of the overcharge prevention layer, a conductive agent may be added to the components of the overcharge prevention layer to improve the rapid responsiveness of the overcharge prevention additive in the overcharge prevention layer during overcharging. That is, at this time, a mass content of the conductive agent in the components of the overcharge prevention layer may be controlled to be greater than 0 and not greater than 5%.

As an example, the mass content of the conductive agent in the components of the overcharge prevention layer may be 0%, 0.5%, 1%, 2%, 3%, 4%, or 5%. Optionally, the mass content of the conductive agent may be a range formed by using any two of the above endpoints. Further, based on the total mass of the overcharge prevention layer, the mass content of the conductive agent is greater than 0 and not greater than 3%, or the mass content ranges from 0.5% to 3%.

Further, a thickness of the first tab adhesive layer ranges from 5 $\mu$m to 100 $\mu$m. As an example, the thickness of the first tab adhesive layer may be 5 $\mu$m, 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, or 100 $\mu$m. Optionally, the thickness of the first tab adhesive layer may be from 30 $\mu$m to 100 $\mu$m.

In some embodiments, the positive electrode tab further includes a second tab adhesive layer adjacent to and disposed in the same layer as the overcharge prevention layer; the region of the positive electrode tab provided with the second tab adhesive layer may serve as a sealing zone. The sealing zone where the second tab adhesive layer is located may serve as a sealing connection position for the positive electrode tab, providing a sealing function, particularly suitable for pouch batteries. As shown in FIG. 4, a top view of another positive electrode tab is shown, where adjacent regions on the surface of the first current collector 1211 (not shown) form an overcharge prevention layer 1212 and a second tab adhesive layer 1214, respectively, thereby forming an overcharge prevention zone and a sealing zone. The overcharge prevention layer 1212 and the second tab adhesive layer 1214 are disposed in the same layer on the first current collector 1211.

Further, in addition to containing a binder, the first tab adhesive layer may optionally include insulating particles, the further selection of the insulating particles may be the same as that of the insulating particles in the overcharge prevention layer, but the specific types in specific examples may be the same or different. The second tab adhesive layer is similar to the first tab adhesive layer.

Further, the first tab adhesive layer includes a binder and insulating particles, and in the first tab adhesive layer, a mass content of the insulating particles ranges from 1% to 30%; more optionally from 5% to 20%. As an example, based on a total mass of the first tab adhesive layer, the mass content of the insulating particles may be 1%, 2%, 5%, 10%, 15%, 20%, 25%, or 30%. The second tab adhesive layer is similar to the first tab adhesive layer.

Further, the second tab adhesive layer and the first tab adhesive layer do not contain a conductive agent or an overcharge prevention additive to provide better insulation protection performance to the positive electrode tab.

Further, a thickness of the second tab adhesive layer ranges from 30 $\mu$m to 150 $\mu$m; optionally from 30 $\mu$m to 100 $\mu$m. As an example, the thickness of the second tab adhesive layer may be 30 $\mu$m, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, or 150 $\mu$m.

Positive electrode plate

In a secondary battery, the positive electrode plate generally includes a second current collector and a positive electrode active layer disposed on the second current collector. The positive electrode active layer includes a positive electrode active material. It can be understood that the second current collector is a positive electrode current collector.

In some embodiments, an area ratio of the overcharge prevention layer in the positive electrode tab to the positive electrode active layer in the positive electrode plate is (1 to 10):100. As an example, the area ratio may be 1:100, 2:100, 3:100, 4:100, 5:100, 6:100, 7:100, 8:100, 9:100, or 10:100. Further, the area ratio may range from (3 to 7): 100. Controlling this area ratio can ensure that the overcharge prevention layer has superior overcharge prevention effect and the second battery has good energy density.

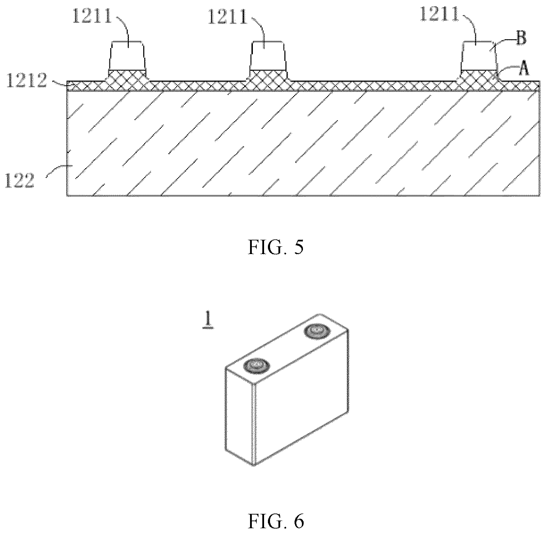

Further, the second current collector and the first current collector of the positive electrode tab are interconnected to form an integral structure. The surface of the first current collector of the positive electrode tab is provided with an overcharge prevention layer, and the surface further includes a blank region adjacent to the overcharge prevention layer where no coating is applied. The overcharge prevention zone where the overcharge prevention layer is located is situated between the blank region and the second current collector. It can be understood that the blank region is not provided with a coating and may serve as an electrical connection end of the positive electrode tab. In the specific examples shown in FIG. 1 and FIG. 5, the positive electrode tab 121 includes an overcharge prevention zone A and a blank region B adjacent to the overcharge prevention zone A.

Optionally, as shown in FIG. 1 and FIG. 5, in some examples, the second current collector and the first current collector are integrally formed. That is, the positive electrode tab and the positive electrode plate are formed by preparation on the same current collector. Further, on this basis, a first tab adhesive layer is formed on the overcharge prevention layer of the first current collector 1211, which is particularly suitable for hard-shell batteries.

Specifically, as shown in FIG. 1, one blank region B of the first current collector 1211 is provided; further, the blank region B has the same width as the overcharge prevention zone A.

Specifically, as shown in FIG. 5, in the positive electrode tab, multiple blank regions B of the first current collector 1211 are provided, and the multiple blank regions B are located on the same side. That is, the multiple blank regions B of the first current collector 1211 are not continuous and may individually serve as connection points.

In other examples, the positive electrode plate and the positive electrode tab are separate structures, that is, the second current collector and the first current collector are separate. For example, the positive electrode tab shown in FIG. 4 may be connected to the positive electrode plate of the electrode assembly through a metal connecting piece or other means.

The second current collector may be a conventional metal foil or a composite current collector, where the composite current collector may be formed by disposing a metal material on a polymer substrate. As an example, the second current collector may be an aluminum foil.

The specific type of positive electrode active material may be an active material known in the art that can be used as a positive electrode of a secondary battery can be used, and persons skilled in the art can make selection based on actual needs.

As an example, the positive electrode active material may include a sodium-ion active material, and the sodium-ion active material may be a well-known positive electrode active material used for sodium-ion batteries in the art. As an example, the sodium-ion active material may include at least one of the following materials: a Prussian blue (PBA) type, with a chemical formula of $NaxMA[MB(CN)_6]\cdot zH_2O$, where MA and MB are transition metal ions, representing a compound consisting of sodium, transition metals, and cyanide, for example, $Na_4Fe_2(CN)_6$, $Na_4Fe(CN)_6$, $Na_{1.72}MnFe_2(CN)_6$, $NaMnMn(CN)_6$, $NaNiFe(CN)_6$, and the like; an oxide type, with a chemical formula of $NaxMO_2$, $0 < x \leq 1$, where M is a transition metal element, and this type consists of a transition metal oxide, involving variable-valence transition metals primarily including vanadium (V), chromium (Cr), manganese (Mn), iron (Fe), cobalt (Co), nickel (Ni), and copper (Cu), with manganese and iron being the most commonly used due to their abundance, for example, $NaCrO_2$, $NaMnO_2$, $NaMnO_2$, $Na_{0.61}Ti_{0.48}Mn_{0.52}O_2$, $Na[Fe_{0.5}Co_{0.5}]O_2$, $NaMnO_2$, $Na[Ni_{0.25}Fe_{0.5}Mn_{0.25}]O_2$, and the like; and a polyanion compound type, with a chemical formula of $Na_xM_y[(XO_m)^{n-}]_z$, where M is a metal ion with variable valence, and X is an element such as P, S, or V, this type consists of sodium, transition metals, and anions, where the transition metals primarily include iron, vanadium, cobalt, and the like, and the anions primarily include phosphate, pyrophosphate, fluorophosphate, and sulfate, for example, $NaMnFe_2(PO_4)_6$, $Na_2MnP_2O_7$, $Na_3V_2(PO_4)_3$, $Na_2Fe_2(SO_4)_3$, $NaFePO_4$, $Na_3V_2(PO_4)_2F_3$, $Na_4CO_3(PO_4)_2(P_2O_7)$.

As an example, the positive electrode active material may include a lithium-ion active material, and the lithium-ion active material includes, but is not limited to, one or more of lithium transition metal oxide, olivine-structured lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

In some embodiments, the modified compounds of the above materials may be obtained through doping modification and/or surface coating modification to the materials.

It can be understood that in a charge and discharge process of a battery, the deintercalation and consumption of active ions such as lithium (Li) occur, and the content of active ions such as Li in the positive electrode plate varies at different states of discharge. Taking a lithium-ion active material as an example, in the enumeration of positive electrode active materials in this application, unless otherwise specified, the Li content refers to the initial state of the material. When the positive electrode active material is applied to the positive electrode plate in a battery system, the Li content in the positive electrode active material contained in the plate generally changes after charge and discharge cycles. The Li content may be measured in terms of molar content, but is not limited thereto. Regarding "the Li content refers to the initial state of the material", the initial state of the material refers to the state before being fed into the positive electrode slurry. It can be understood that materials obtained by appropriate modification based on the listed positive electrode active materials also fall within the scope of positive electrode materials, where the appropriate modification refers to acceptable modification methods for positive electrode active materials, non-limiting examples including coating modification.

In the enumeration of positive electrode active materials in this application, the oxygen (O) content is merely a theoretical value, and lattice oxygen release may cause changes in the molar content of oxygen, resulting in fluctuations in the actual oxygen atom content. The oxygen atom content may be measured in terms of molar content, but is not limited thereto.

The positive electrode active layer generally further optionally includes a binder, a conductive agent, and other optional additives.

As an example, the conductive agent may be one or more of superconducting carbon, acetylene black, carbon black, Ketjen black, carbon dots, carbon nanotubes, Super P (SP), graphene, and carbon nanofibers.

As an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In some embodiments, the positive electrode plate may be prepared in the following manner: The above constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the second current collector, followed by processes such as drying and cold pressing to obtain the positive electrode plate.

Negative electrode plate

The negative electrode plate generally includes a negative electrode current collector and a negative electrode film layer disposed on the negative electrode current collector. It can be understood that in some examples, the negative electrode film layer may be omitted.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, the metal foil may be a copper foil. The composite current collector may include a polymer material substrate and a metal layer formed on at least one surface of the polymer material substrate. The composite current collector may be formed by disposing a metal material on the polymer material substrate. The metal material includes, but is not limited to, at least one of copper, copper alloy, nickel, nickel alloy, titanium, titanium alloy, silver, and silver alloy. The polymer material substrate includes, but is not limited to, at least one of polypropylene (PP), polyethylene terephthalate (PET), polybutylene terephthalate (PBT), polystyrene (PS), and polyethylene (PE).

Further, the negative electrode film layer includes a negative electrode active material. It can be understood that in some examples, the negative electrode film layer may not contain a negative electrode active material.

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other additives, such as a thickener, for example, sodium carboxymethyl cellulose (CMC-Na).

In some embodiments, the negative electrode plate can be prepared in the following manner: The constituents used for preparing the negative electrode plate, for example, the negative electrode active material, the conductive agent, the binder, and any other constituent, are dispersed in a solvent to form a negative electrode slurry; and the negative electrode slurry is applied onto the negative electrode current collector, followed by processes such as drying and cold pressing to obtain the negative electrode plate.

Electrolyte

The electrolyte conducts ions between the positive electrode plate and the negative electrode plate. For example, the electrolyte may be in a liquid state, a gel state, or an all-solid state.

In some embodiments, the electrolyte is a liquid electrolyte, and the liquid electrolyte includes an electrolytic salt and a solvent.

In some embodiments, the electrolytic salt includes at least one of a sodium salt, a lithium salt, and a potassium salt.

As an example, the sodium salt in the electrolytic salt may be selected from one or more of sodium perchlorate ($NaClO_4$), sodium tetrafluoroborate ($NaBF_4$), sodium hexafluorophosphate ($NaPF_6$), sodium hexafluoroarsenate ($NaAsF_6$), sodium trifluoroacetate ($CF_3COONa$), sodium tetraphenylborate ($NaB(C_6H_5)_4$), sodium trifluoromethanesulfonate ($NaSO_3CF_3$), sodium bis(fluorosulfonyl)imide ($Na[(FSO_2)_2N]$), or sodium bis(trifluoromethanesulfonyl)imide ($Na[(CF_3SO_2)_2N]$).

As an example, the lithium salt in the electrolytic salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluoro(bisoxalato)phosphate (LiDFOP), and lithium tetrafluoro(oxalato)phosphate (LiTFOP).

In some embodiments, the solvent includes at least one of an ether solvent, an ester solvent, and a sulfone solvent.

As an example, the ether solvent may include at least one of ethylene glycol dimethyl ether (DME), diethylene glycol dimethyl ether (DEGDME), triethylene glycol dimethyl ether (TRGDME), tetraethylene glycol dimethyl ether (TEGDME), and 1,3-dioxolane (DOL);

As an example, the ester solvent may include at least one of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), 1,3-propane sultone (1,3-PS), methyl propionate (MP), methyl butyrate (MB), ethyl acetate (EA), ethyl propionate (EP), propyl propionate (PP), and ethyl butyrate (EB).

As an example, the sulfone solvent includes dimethyl sulfoxide (DMSO).

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

Separator

In some embodiments, the secondary battery further includes a separator. The separator is disposed between the positive electrode plate and the negative electrode plate for separation.

In some embodiments, a material of the separator may be selected from at least one of glass fiber, non-woven fabric, polyethylene, polypropylene, and polyvinylidene fluoride.

The separator may be a single-layer film or a multi-layer composite film. When the separator is a multi-layer composite film, all layers may be made of the same or different materials.

The raw materials that are not specifically described above are all commercially available.

The shape of the secondary battery in the embodiments of this application may be cylindrical, prismatic, or of any other shape. FIG. 6 shows a rectangular battery cell 1 as an example.

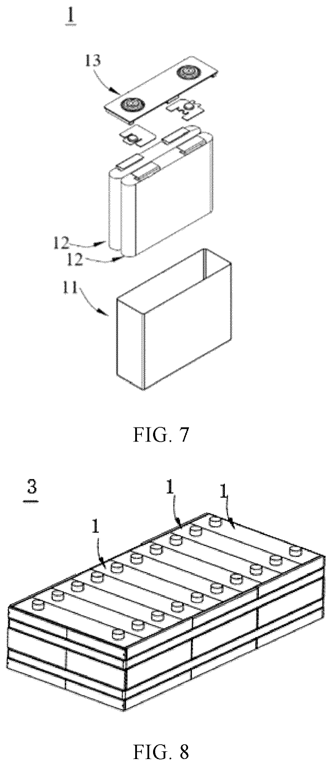

In some embodiments, referring to FIG. 7, an outer package may include a housing 11 and a cover plate 13. The housing 11 may include a base plate and side plates connected to the base plate, and the base plate and the side plates enclose an accommodating cavity. The housing 11 has an opening communicating with the accommodating cavity, and the cover plate 13 can cover the opening to close the accommodating cavity. The positive electrode plate, the negative electrode plate, and the separator may be made into an electrode assembly 12 through winding or lamination. The electrode assembly 12 is packaged in the accommodating cavity. The electrolyte infiltrates the electrode assembly 12. The battery cell 1 may include one or more electrode assemblies 12, and persons skilled in the art may make choices according to specific actual needs.

The secondary battery may be a battery cell, a battery module, or a battery pack.

FIG. 8 shows a battery module 3 as an example. Referring to FIG. 8, in the battery module 3, multiple battery cells 1 may be sequentially arranged along a length direction of the battery module 3. Certainly, the secondary batteries may alternatively be arranged in any other manner. Further, the multiple battery cells 1 may be fastened through fasteners.

Optionally, the battery module 3 may further include a shell with an accommodating space, and the multiple battery cells 1 are accommodated in the accommodating space.

In some embodiments, the above battery module may be further assembled into a battery pack, and the battery pack may include one or more battery modules. The specific quantity may be chosen by persons skilled in the art based on use and capacity of the battery pack.

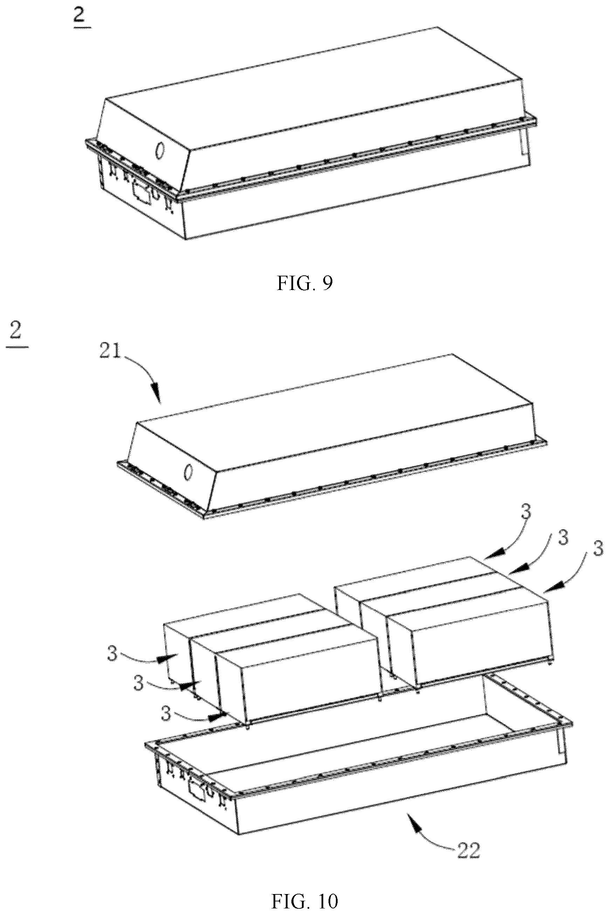

FIG. 9 and FIG. 10 show a battery pack 2 as an example. Referring to FIG. 9 and FIG. 10, the battery pack 2 may include a battery box and multiple battery modules 3 disposed in the battery box. The battery box includes an upper box 21 and a lower box 22. The upper box 21 can cover the lower box 22 to form an enclosed space for accommodating the battery modules 3. The multiple battery modules 3 may be arranged in the battery box in any manner.

Additionally, this invention further provides an electric apparatus. The electric apparatus includes the secondary battery provided by this invention. The secondary battery may be used as a power source for the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

As the electric apparatus, a secondary battery pack may be selected according to requirements for using the electric apparatus.

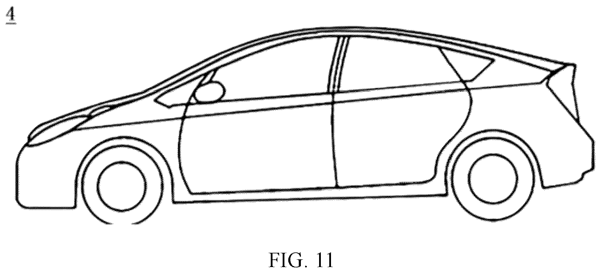

FIG. 11 shows an electric apparatus 4 as an example. This electric apparatus 4 is a battery electric vehicle, a hybrid electric vehicle, a plug-in hybrid electric vehicle, or the like.

In another example, the apparatus may be a mobile phone, a tablet computer, a notebook computer, or the like.

To make the objectives, technical solutions, and advantages of this invention clearer and more concise, this invention is illustrated with the following specific examples, but this invention is not limited to these examples. The examples described below are merely preferable examples of this invention and can be used for describing this invention. They should not be construed as limitations on the scope of this invention. It should be noted that any modification, equivalent replacement, or improvement made without departing from the spirit and principle of this application shall fall within the protection scope of this invention.

To better illustrate this invention, the content of this invention is further illustrated below with reference to the examples. The following are specific examples.

Example 1

(1) Preparation of positive electrode plate and positive electrode tab

A nickel cobalt manganese (NCM111) ternary material, a conductive agent carbon black, and a binder polyvinylidene fluoride (PVDF) were taken at a mass ratio of 97:1:2, N-methylpyrrolidone was added, and mixed and stirred for 2 h to obtain a positive electrode slurry;

insulating particles ($Al_2O_3$ particles, particle size Dv50 of 5 $\mu$m), an overcharge additive $Li_2C_2O_4$, and a binder (polypropylene) were mixed at a mass ratio of 15:15:70, solvent water was added, and the mixture was mixed to obtain an overcharge prevention slurry; and

the positive electrode slurry was uniformly applied onto a main body region of an aluminum foil positive electrode current collector with a thickness of 6 $\mu$m, and the overcharge prevention slurry was uniformly applied onto an edge on one side of the main body region of the positive electrode current collector (i.e., an overcharge prevention zone A), with the outermost edge left blank and uncoated as a blank region. After drying, cold pressing, and slitting, the positive electrode slurry formed a positive electrode active layer, and the overcharge prevention slurry formed an overcharge prevention layer. Accordingly, from the main body region to the outermost edge, a positive electrode plate, an overcharge prevention layer of a positive electrode tab, and a blank region of the positive electrode tab were formed, respectively. The structure of the positive electrode plate and the positive electrode tab is as shown in FIG. 1, with the blank region being continuous. A thickness of the positive electrode active layer was 150 $\mu$m.

(2) Preparation of negative electrode plate

Graphite, a binder styrene-butadiene rubber (SBR), a dispersant (CMC-Na), and a conductive carbon black (Super-P, SP) were fully stirred and mixed in an appropriate amount of deionized water at a weight ratio of 96:2:1:1 to prepare a negative electrode slurry. The negative electrode active slurry was applied onto a copper foil with a thickness of 6 $\mu$m, dried, and cold pressed to form a negative electrode active material layer, and cut into a negative electrode plate. A thickness of the negative electrode active layer was 150 $\mu$m.

(3) Separator

A polypropylene film was used as the separator.

(4) Electrolyte

LiPF$_6$ was dissolved in a solvent of ethylene carbonate, ethyl methyl carbonate, and diethyl carbonate at a volume ratio of 1:1:1 to prepare an electrolyte with a concentration of 1 mol/L.

(5) Preparation of lithium-ion battery

The positive electrode plate with the positive electrode tab, the separator, and the negative electrode plate were sequentially stacked and wound to obtain a bare cell; the bare cell was placed into a packaging shell and dried. Then the electrolyte was injected, and processes such as vacuum packaging, standing, formation, and shaping were performed to obtain a lithium-ion battery.

Other Examples 1 to 26

The preparations were substantially the same as in Example 1, except that some parameters (type and content of the overcharge prevention additive, type and content of the insulating particles, thickness of the overcharge prevention layer, and area ratio of the overcharge prevention layer to the positive electrode active layer) were different, as specifically shown in Table 1.

Examples 27 to 29

The preparations were substantially the same as in Example 1, except that a first tab adhesive layer was further applied onto a surface of the overcharge prevention layer of the positive electrode tab, and the first tab adhesive layer is a polypropylene layer. The difference between Examples 27 to 29 was that the thickness of the first tab adhesive layer was different.

Example 30

The preparation was substantially the same as in Example 1, except that in Example 30, the positive electrode tab and the positive electrode plate were separate structures, as specifically shown in FIG. 4.
The preparation steps for the positive electrode plate and the positive electrode tab were as follows:
A nickel cobalt manganese (NCM111) ternary material, a conductive agent carbon black, and a binder polyvinylidene fluoride (PVDF) were taken at a mass ratio of 97:1:2, N-methylpyrrolidone was added, and mixed and stirred for 2 h to obtain a positive electrode slurry; the positive electrode slurry was uniformly applied onto an aluminum foil positive electrode current collector with a thickness of 6 $\mu$m, and after drying, cold pressing, and slitting, a positive electrode plate was formed;

insulating particles (Al$_2$O$_3$ particles, particle size Dv50 of 5 $\mu$m), an overcharge additive Li$_2$C$_2$O$_4$, and a binder (polypropylene) were mixed at a mass ratio of 15:15:70, solvent water was added, and the mixture was mixed to obtain an overcharge prevention slurry; and
the overcharge prevention slurry was uniformly applied onto a region of a thick aluminum foil current collector with a thickness of 6 $\mu$m to form an overcharge prevention layer, and a polypropylene adhesive was applied onto a sealing zone adjacent to the overcharge prevention layer. After drying, cold pressing, and slitting, a positive electrode tab was formed, with a structure as shown in FIG. 4, and an overcharge prevention layer 1212 and a second tab adhesive layer 1214 (polypropylene layer) disposed in the same layer were respectively formed in regions adjacent to a surface of the first current collector 1211 (not shown).

Comparative Example 1

The preparation was substantially the same as in Example 1, except the preparation of the positive electrode tab and the positive electrode plate, which is specifically as follows:

A nickel cobalt manganese (NCM111) ternary material, a conductive agent carbon black, and a binder polyvinylidene fluoride (PVDF) were taken at a mass ratio of 97:1:2, N-methylpyrrolidone was added, mixed and stirred for 2 h, and then an overcharge additive $Li_2C_2O_4$ (with a mass of 15% of a total mass of the nickel cobalt manganese (NCM111) ternary material, the conductive agent carbon black, and the binder polyvinylidene fluoride) was added to obtain a positive electrode slurry;

insulating particles ($Al_2O_3$ particles) and a binder (polypropylene) were mixed at a mass ratio of 15:85, solvent water was added, and the mixture was mixed to obtain a tab adhesive slurry; and

the positive electrode slurry was uniformly applied onto a main body region of the positive electrode current collector, and the tab adhesive slurry was uniformly applied onto an edge on one side of the main body region of the positive electrode current collector (i.e., an overcharge prevention zone A), with the outermost edge left blank and uncoated as a blank region. After drying, cold pressing, and slitting, the positive electrode slurry formed a positive electrode active layer, and the tab adhesive slurry formed a tab adhesive layer. Accordingly, from the main body region to the outermost edge, a positive electrode plate, an overcharge prevention layer of a positive electrode tab, and a blank region of the positive electrode tab were formed, respectively. As shown in FIG. 1, the blank region is continuous.

Battery performance testing

(1) Cycle performance test

Cycle capacity retention rate

Taking Example 1 as an example, five samples of the sodium batteries from Example 1 were taken as a group. The group of sodium batteries was charged at a constant current of 1C to 3.7V at 25°C, then charged at a constant voltage of 3.7V until the current dropped to 0.05C, and discharged at a constant current of 1C to 2.5V to obtain a first-cycle discharge capacity (Cd1). The battery was repeatedly charged and discharged to the n-th cycle in such way to obtain a discharge capacity of the sodium battery after n cycles. The obtained discharge capacity was denoted as Cdn. The capacity retention rate of each sodium battery was calculated according to the following formula, and an average value was taken, with results shown in Table 1:

Capacity retention rate = discharge capacity (Cdn) after n cycles/first-cycle discharge capacity (Cd1).

(2) Overcharge prevention test

Taking Example 1 as an example, twenty samples of the sodium batteries from Example 1 were taken as a group. The group of sodium batteries was discharged at a constant current of 0.5C to 3.0V at 25±5°C, left to stand for 12 to 24 h, charged at a constant current of 3C to 10V, and continued charging for 7 hours, with the process results observed. Determination criterion: no fire or explosion indicated an overcharge test was passed. An overcharge test pass rate was calculated based on the number of samples and the total number of samples.

The partial parameters and performance test results of the secondary batteries of each example and comparative example were shown in Table 1.

**Table 1**

| Item / Group | Positive Electrode Tab | | | | | | | | Battery Performance Test | |
| | Overcharge Prevention Layer | | | | | | Thickness of First Tab Adhesive Layer (μm) | Thickness of Second Tab Adhesive Layer (μm) | | |
| | Overcharge Prevention Additive | | Insulating Particles | | Thickness (μm) | Area Ratio of Overcharge Prevention Layer to Positive Electrode Active Layer | | | 100-Cycle Capacity Retention Rate | Overcharge Prevention Rate |
| | Type | Mass Content | Type | Mass Content | | | | | | |
|---|---|---|---|---|---|---|---|---|---|---|
| Example 1 | $Li_2C_2O_4$ | 15% | $Al_2O_3$ | 15% | 70 | 5:100 | / | / | 83% | 95% |
| Example 2 | $Li_2C_4O_4$ | 15% | $Al_2O_3$ | 15% | 70 | 5:100 | / | / | 81% | 100% |
| Example 3 | $Li_2C_4O_6$ | 15% | $Al_2O_3$ | 15% | 70 | 5:100 | / | / | 82% | 100% |
| Example 4 | $Li_2C_3O_5$ | 15% | $Al_2O_3$ | 15% | 70 | 5:100 | / | / | 82% | 100% |
| Example 5 | $LiN_3$ | 15% | $Al_2O_3$ | 15% | 70 | 5:100 | / | / | 83% | 95% |
| Example 6 | $Li_2C_2O_4+Li_2C_4O_6$ | 7.5%+7.5% | $Al_2O_3$ | 15% | 70 | 5:100 | / | / | 83% | 100% |
| Example 7 | $Li_2C_2O_4+Li_2C_4O_6$ | 9%+6% | $Al_2O_3$ | 15% | 70 | 5:100 | / | / | 84% | 100% |
| Example 8 | $Li_2C_2O_4+Li_2C_4O_6$ | 12%+3% | $Al_2O_3$ | 15% | 70 | 5:100 | / | / | 85% | 100% |
| Example 9 | $Li_2C_2O_4$ | 10% | $Al_2O_3$ | 15% | 70 | 5:100 | / | / | 83% | 95% |
| Example 10 | $Li_2C_2O_4$ | 5% | $Al_2O_3$ | 15% | 70 | 5:100 | / | / | 85% | 95% |
| Example 11 | $Li_2C_2O_4$ | 2% | $Al_2O_3$ | 15% | 70 | 5:100 | / | / | 86% | 90% |
| Example 12 | $Li_2C_2O_4$ | 20% | $Al_2O_3$ | 15% | 70 | 5:100 | / | / | 82% | 100% |
| Example 13 | $Li_2C_2O_4$ | 0.5% | $Al_2O_3$ | 15% | 70 | 5:100 | / | / | 88% | 80% |
| Example 14 | $Li_2C_2O_4$ | 50% | $Al_2O_3$ | 15% | 70 | 5:100 | / | / | 80% | 100% |
| Example 15 | $Li_2C_2O_4$ | 15% | ZnO | 1% | 70 | 5:100 | / | / | 81% | 100% |
| Example 16 | $Li_2C_2O_4$ | 15% | $SiO_2$ | 30% | 70 | 5:100 | / | / | 83% | 90% |
| Example 17 | $Li_2C_2O_4$ | 15% | $Al_2O_3$ | 5% | 70 | 5:100 | / | / | 82% | 95% |
| Example 18 | $Li_2C_2O_4$ | 15% | $Al_2O_3$ | 20% | 70 | 5:100 | / | / | 83.5% | 95% |
| Example 19 | $Li_2C_2O_4$ | 15% | $Al_2O_3$ | 15% | 30 | 5:100 | / | / | 82.5% | 95% |
| Example 20 | $Li_2C_2O_4$ | 15% | $Al_2O_3$ | 15% | 100 | 5:100 | / | / | 84% | 95% |

| Item | Positive Electrode Tab | | | | | | | | Battery Performance Test | |
| | Overcharge Prevention Layer | | | | | | Thickness of First Tab Adhesive Layer ($\mu$m) | Thickness of Second Tab Adhesive Layer ($\mu$m) | 100-Cycle Capacity Retention Rate | Overcharge Prevention Rate |
| Group | Overcharge Prevention Additive | | Insulating Particles | | Thickness ($\mu$m) | Area Ratio of Overcharge Prevention Layer to Positive Electrode Active Layer | | | | |
| | Type | Mass Content | Type | Mass Content | | | | | | |
| Example 21 | $Li_2C_2O_4$ | 15% | $Al_2O_3$ | 15% | 10 | 5:100 | / | / | 83% | 85% |
| Example 22 | $Li_2C_2O_4$ | 15% | $Al_2O_3$ | 15% | 150 | 5:100 | / | / | 82% | 95% |
| Example 23 | $Li_2C_2O_4$ | 15% | $Al_2O_3$ | 15% | 100 | 3:100 | / | / | 83.5% | 95% |
| Example 24 | $Li_2C_2O_4$ | 15% | $Al_2O_3$ | 15% | 100 | 7:100 | / | / | 82.5% | 95% |
| Example 25 | $Li_2C_2O_4$ | 15% | $Al_2O_3$ | 15% | 100 | 1:100 | / | / | 84% | 95% |
| Example 26 | $Li_2C_2O_4$ | 15% | $Al_2O_3$ | 15% | 100 | 10:100 | / | / | 82% | 100% |
| Example 27 | $Li_2C_2O_4$ | 15% | $Al_2O_3$ | 15% | 100 | 5:100 | 100 | / | 84% | 95% |
| Example 28 | $Li_2C_2O_4$ | 15% | $Al_2O_3$ | 15% | 100 | 5:100 | 30 | / | 83.5% | 95% |
| Example 29 | $Li_2C_2O_4$ | 15% | $Al_2O_3$ | 15% | 100 | 5:100 | 5 | / | 82% | 95% |
| Example 30 | $Li_2C_2O_4$ | 15% | $Al_2O_3$ | 15% | 100 | 5:100 | / | 100 | 83% | 95% |
| Comparative Example 1 | Overcharge prevention additive incorporated into positive electrode active layer | | | | | | | | 78% | 100% |
| Where "/" indicates that the parameter is not involved. | | | | | | | | | | |

EP 4 672 420 A1

From Table 1, it can be seen that Comparative Example 1 incorporates adding the overcharge prevention additive into the positive electrode active layer. Compared to Comparative Example 1, each example can effectively improve the cycle performance of the secondary battery while achieving good overcharge prevention performance.

Examples 1 to 8 are substantially the same, except that the type of overcharge prevention additive is different. From Examples 1 to 5, it can be seen that the batteries prepared in Examples 1 and 5 exhibit better cycle performance, and the batteries prepared in Examples 2 to 4 exhibit better overcharge prevention performance. Examples 6 to 8 further employ a combination of two overcharge prevention additives, achieving both better cycle performance and overcharge prevention performance.

Examples 1 and 9 to 14 are substantially the same, except that the content of the overcharge prevention additive is different. When the mass content of the overcharge prevention additive in the overcharge prevention layer ranges from 0.5% to 50%, it can effectively improve the cycle performance of the secondary battery while achieving good overcharge prevention performance. Further, when the mass content of the overcharge prevention additive in the overcharge prevention layer ranges from 2% to 20%, it can achieve both good overcharge prevention performance and cycle performance.

Examples 1 and 15 to 18 are substantially the same, except that at least one of the type and content of the insulating particles is different. When the mass content of the insulating particles in the overcharge prevention layer further ranges from 5% to 20%, it can achieve both good overcharge prevention performance and cycle performance.

Examples 1 and 19 to 22 are substantially the same, except that the thickness of the overcharge prevention layer is different. When the thickness of the overcharge prevention layer ranges from 30 $\mu$m to 100 $\mu$m, it can achieve both good overcharge prevention performance and cycle performance.

Examples 1 and 23 to 26 are substantially the same, except that the area ratio of the overcharge prevention layer to the positive electrode active layer is different. When the area ratio of the overcharge prevention layer to the positive electrode active layer ranges from (3 to 7):100, it can achieve both good overcharge prevention performance and cycle performance.

Examples 27 to 29 are substantially the same as Example 1, except that a first tab adhesive layer is further applied onto the surface of the overcharge prevention layer of the positive electrode tab; and the difference between Examples 27 to 29 is that the thickness of the first tab adhesive layer is different, which can provide good insulation protection performance while further improving cycle performance.

Example 30 is substantially the same as Example 1, except that in Example 30, the positive electrode tab and the positive electrode plate are separate structures, and the cycle performance and overcharge prevention performance of the prepared battery are comparable to those of Example 1.

Technical features in the foregoing embodiments may be combined in any way. For brevity of description, not all possible combinations of the technical features in the foregoing embodiments are described. However, as long as there is no contradiction among combinations of these technical features, all the combinations should be considered within a range recorded in this specification.

The above embodiments only represent several implementations of this invention, and descriptions thereof are specific and detailed, but should not be construed as a limitation on the scope of this invention. It should be noted that those of ordinary skill in the art can further make several modifications and improvements without departing from the concept of this invention, and these modifications and improvements also fall within the protection scope of this invention. Therefore, the protection scope of this invention should be subject to the appended claims, and the specification and the accompanying drawings may be used to explain the contents of the claims.

**Claims**

1. A secondary battery, comprising a positive electrode plate and a positive electrode tab connected to the positive electrode plate, wherein the positive electrode tab comprises a first current collector and an overcharge prevention layer, the overcharge prevention layer being disposed on a surface of the first current collector, and the overcharge prevention layer comprising an overcharge prevention additive.

2. The secondary battery according to claim 1, wherein the overcharge prevention additive comprises at least one of $Li_2C_2O_4$, $Li_2C_4O_4$, $Li_2C_3O_5$, $Li_2C_4O_6$, $Li_2C_6O_6$, $Li_2CO_3$, $LiN_3$, LiODFB, $Li_2O$, $Li_3N$, LiF, LiCl, $Li_2S$, $LiBH_4$, $CH_3COOLi$, $LiNO_3$, and $Li_2SO_4$.

3. The secondary battery according to claim 2, wherein in the overcharge prevention additive, a mass content of $Li_2C_2O_4$ ranges from 50% to 95%.

4. The secondary battery according to any one of claims 1 to 3, wherein the overcharge prevention layer further comprises a binder; and
based on a total mass of the overcharge prevention layer, a mass content of the overcharge prevention additive ranges from 0.5% to 50%.

5. The secondary battery according to claim 4, wherein the binder comprises at least one of polypropylene, polyacrylic acid, polystyrene, polyterephthalic acid, styrene-butadiene rubber, water-based acrylic resin, polytetrafluoroethylene, ethylene-vinyl acetate copolymer, carboxymethyl cellulose, polyvinyl alcohol, polyvinyl butyral, and polyvinylidene fluoride.

6. The secondary battery according to any one of claims 1 to 5, wherein the positive electrode plate comprises a second current collector and a positive electrode active layer disposed on the second current collector; and
an area ratio of the overcharge prevention layer to the positive electrode active layer is (1 to 10): 100.

7. The secondary battery according to any one of claims 1 to 6, wherein the overcharge prevention additive is capable of decomposing and producing gas at a voltage greater than or equal to 4.2V.

8. The secondary battery according to any one of claims 1 to 7, wherein the overcharge prevention layer further comprises insulating particles; and
based on the total mass of the overcharge prevention layer, a mass content of the insulating particles ranges from 1% to 30%.

9. The secondary battery according to any one of claims 1 to 8, wherein a thickness of the overcharge prevention layer ranges from 10 $\mu$m to 150 $\mu$m.

10. The secondary battery according to any one of claims 1 to 9, wherein the positive electrode tab further comprises a first tab adhesive layer, and the first tab adhesive layer is disposed on a surface of the overcharge prevention layer facing away from the first current collector.

11. The secondary battery according to claim 10, wherein the overcharge prevention layer further comprises a conductive agent with a mass content ranging from 0% to 5%.

12. The secondary battery according to claim 10 or 11, wherein a thickness of the first tab adhesive layer ranges from 5 $\mu$m to 100 $\mu$m.

13. The secondary battery according to any one of claims 1 to 12, wherein the positive electrode plate comprises a second current collector and a positive electrode active layer disposed on the second current collector, the second current collector and the first current collector being interconnected to form an integral structure, the surface of the first current collector further comprising a blank region adjacent to the overcharge prevention layer, and the overcharge prevention layer being located between the blank region and the second current collector.

14. The secondary battery according to any one of claims 1 to 13, wherein the positive electrode tab further comprises a second tab adhesive layer adjacent to and disposed in the same layer as the overcharge prevention layer.

15. The secondary battery according to claim 14, wherein a thickness of the second tab adhesive layer ranges from 30 $\mu$m to 150 $\mu$m.

16. An electric apparatus, comprising the secondary battery according to any one of claims 1 to 15.

FIG. 1

FIG. 2

FIG. 3

FIG. 4

FIG. 5

FIG. 6

FIG. 7

FIG. 8

2

FIG. 9

2

21

3

3

3

3

3

3

22

FIG. 10

4

FIG. 11

## INTERNATIONAL SEARCH REPORT

| International application No. |
| --- |
| **PCT/CN2024/076076** |

**A. CLASSIFICATION OF SUBJECT MATTER**

H01M10/42(2006.01)i;  H01M10/0525(2010.01)i;  H01M10/058(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 正极, 阴极, 碳酸锂, li2co3, 过充, 极耳, positive electrode, cathode, lithium carbonate, overcharge, pole ear, tab

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116683058 A (CONTEMPORARY AMPEREX TECHNOLOGY CO., LTD.) 01 September 2023 (2023-09-01) description, paragraphs [0004]-[0020] | 1-16 |
| X | CN 206322779 U (TESSON NEW ENERGY RESEARCH NANJING CO., LTD.) 11 July 2017 (2017-07-11) description, paragraphs [0004]-[0016] | 1-16 |
| Y | CN 206322779 U (TESSON NEW ENERGY RESEARCH NANJING CO., LTD.) 11 July 2017 (2017-07-11) description, paragraphs [0004]-[0016] | 2-16 |
| Y | CN 113130972 A (MICROVAST POWER SYSTEMS (HUZHOU) CO., LTD.) 16 July 2021 (2021-07-16) description, paragraphs [0004]-[0093] | 2-16 |
| Y | CN 111095612 A (LG CHEM, LTD.) 01 May 2020 (2020-05-01) description, paragraphs [0010]-[0045] | 2-16 |
| Y | CN 116130809 A (HARBIN INSTITUTE OF TECHNOLOGY) 16 May 2023 (2023-05-16) description, paragraphs [0005]-[0049] | 2-16 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 May 2024** | **13 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/076076** |

| C. | DOCUMENTS CONSIDERED TO BE RELEVANT | |
| --- | --- | --- |
| Category* | Citation of document, with indication, where appropriate, of the relevant passages | Relevant to claim No. |
| X | JP 2009238387 A (SANYO ELECTRIC CO., LTD.) 15 October 2009 (2009-10-15) description, paragraphs [0008]-[0044] | 1-16 |

Form PCT/ISA/210 (second sheet) (July 2022)

## INTERNATIONAL SEARCH REPORT
### Information on patent family members

International application No.

**PCT/CN2024/076076**

| Patent document cited in search report | | | Publication date (day/month/year) | Patent family member(s) | | | Publication date (day/month/year) |
|---|---|---|---|---|---|---|---|
| CN | 116683058 | A | 01 September 2023 | None | | | |
| CN | 206322779 | U | 11 July 2017 | None | | | |
| CN | 113130972 | A | 16 July 2021 | None | | | |
| CN | 111095612 | A | 01 May 2020 | KR | 20190032241 | A | 27 March 2019 |
| | | | | KR | 102465819 | B1 | 11 November 2022 |
| | | | | US | 2020266433 | A1 | 20 August 2020 |
| | | | | US | 11569501 | B2 | 31 January 2023 |
| | | | | EP | 3671909 | A2 | 24 June 2020 |
| | | | | EP | 3671909 | A4 | 19 August 2020 |
| | | | | EP | 3671909 | B1 | 27 October 2021 |
| | | | | JP | 2020535588 | A | 03 December 2020 |
| | | | | JP | 7062161 | B2 | 06 May 2022 |
| | | | | PL | 3671909 | T3 | 17 January 2022 |
| | | | | CN | 111095612 | B | 24 March 2023 |
| CN | 116130809 | A | 16 May 2023 | None | | | |
| JP | 2009238387 | A | 15 October 2009 | None | | | |

Form PCT/ISA/210 (patent family annex) (July 2022)

**EP 4 672 420 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023109218896